# EUROPEAN PATENT APPLICATION

(11) **EP 3 961 209 A1**
(43) Date of publication of application: **02.03.2022**
(21) Application number: 21191920.4
(22) Date of filing: 18.08.2021
(51) Int. Cl.: G01N 30/60

(54) **GAS CHROMATOGRAPHY COLUMN CONNECTOR**

(30) Priority: 28.08.2020 US 202063071502 P
(71) Applicant: Thermo Finnigan LLC, San Jose, CA 95134 (US)
(72) Inventor: BRYANT, Adam Durgin, Austin, 78728 (US); FACCHETTI, Riccardo, 20090 Rodano (IT)
(74) Representative: Boult Wade Tennant LLP

(57) **Abstract**

A connector 200 for a gas chromatography (GC) column includes a receiving portion 202 coupled to a ferrule receiving conical surface and a column holding portion 204. The column holding portion 204 includes a column guide tube 212 and a column retention spring 214 to fix the axial position of the column and a compression spring 216 to bias the column guide tube 212 towards the ferrule receiving conical surface. When connected, a ferrule 222 is compressed between the ferrule receiving conical surface and the column guide tube.

## Description

### FIELD

The present disclosure generally relates to the field of gas chromatography including gas chromatography column connectors.

### INTRODUCTION

Gas chromatography (GC) is a useful technique for analyzing volatile compounds of a sample. A GC column having a retention medium or stationary phase can be used to separate the volatile compounds based on their affinity to the retention medium. The time it takes a compound to traverse the column (retention time) is compound dependent as compounds with higher affinity for the stationary phase can be retained in the column for a longer period of time than compounds that have limited interactions with the stationary phase.

As the mobile phase is a gas (typically helium, hydrogen, or nitrogen), it is necessary to ensure gas tight connections between the column and a sampling device, such as an injector, at one end and a detector at the other end. Typically, connecting the column involves threading a ferrule onto the column, trimming the end of the column to remove any damage or contamination caused by threading the ferrule and positioning the end of the column at an optimal length for the sampling device or detector. With typical connection fittings, it can be difficult to maintain the column positioning while attaching the column.

From the foregoing it will be appreciated that a need exists for improved gas chromatography column connectors.

### SUMMARY

A connector for a gas chromatography (GC) column can include a receiving portion coupled to a ferrule receiving conical surface and a column holding portion. The column holding portion can include a column guide tube and a column retention spring to fix the axial position of the column and a compression spring to bias the column guide tube towards the ferrule receiving conical surface. When connected, a ferrule can be compressed between the ferrule receiving conical surface and the column guide tube.

### DRAWINGS

For a more complete understanding of the principles disclosed herein, and the advantages thereof, reference is now made to the following descriptions taken in conjunction with the accompanying drawings, in which:
Figure 1 is a diagram of an exemplary gas chromatography system.
Figure 2 is an exploded view of an exemplary column connector, in accordance with various embodiments.
Figure 3 is a perspective view of an exemplary column connector, in accordance with various embodiments.
Figure 4A is a cross section view of an exemplary column connector, in accordance with various embodiments.
Figure 4B is a cross section view of an exemplary column connector with a column, in accordance with various embodiments.
Figure 5 is a cross section view of an attachment point of a detector, in accordance with various embodiments.
Figure 6 is a flow diagram illustrating a method of connecting a GC column, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods for gas chromatography column connectors are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied and still remain within the spirit and scope of the various embodiments disclosed herein.

All literature and similar materials cited in this application, including but not limited to, patents, patent applications, articles, books, treatises, and internet web pages are expressly incorporated by reference in their entirety for any purpose. Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

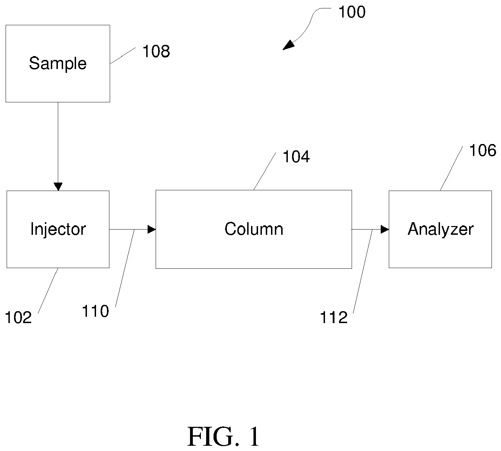

FIG. 1 illustrates a typical gas chromatograph system 100. The system includes an injector 102, a column 104, and a detector 106. A sample 108 can be supplied to the injector 102. In various embodiments, the sample 108 can be a gaseous sample, such as for head space analysis. In other embodiments, the sample 108 can be a liquid sample and the injector can vaporize the liquid sample into a gaseous state. The sample can be moved from the injector to the column 104 by a carrier gas. The column 104 includes a retention medium, typically as a thin coating on the interior surface of the column 104. The retention medium can differentially retain some compounds from the vaporized sample such that the amount of time necessary to transit the column is compound dependent. In this way, the compounds in the vaporized sample can be separated based on the time to transit the column (retention time).

Upon exiting the column 104, the compounds can enter the detector 106. Various detectors can be used as part of a GC system including flame ionization detectors, nitrogen phosphorous detectors, electron capture detectors, thermal conductivity detectors, flame photometric detectors, mass spectrometers, and the like.

The injector 102 can be coupled to the column 104 with connector 110 and column 104 can be coupled to the detector 106 by connector 112. In various embodiments, connectors 110 and 112 can be compression fittings in which a ferrule is threaded onto column 104 and deformed to form a seal to prevent leaks. In various embodiments, it may be necessary to position column 104 such that the end of the column 104 extends a predetermined distance from the ferrule. Additionally, the optimum distance the end of the column extends past the ferrule can be dependent on what the column is connecting to, with the optimal distance to connect to the injector being different than the optimal distance to connect to the detector, and the optimal distance for connecting to the detector being dependent on the type and model of detector being used.

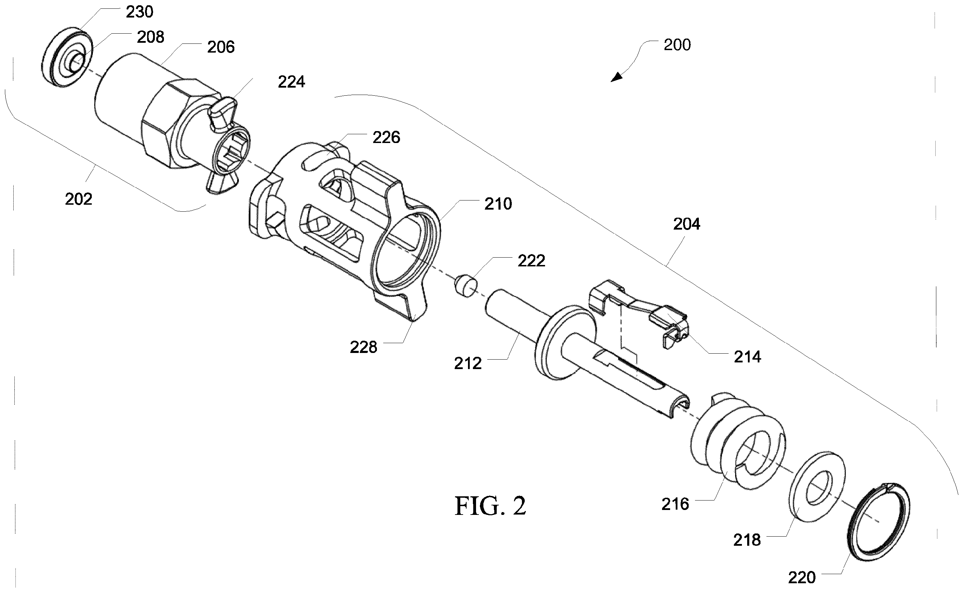

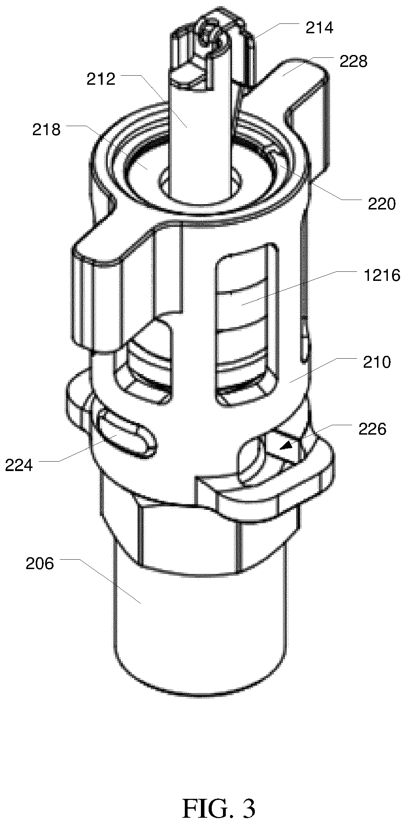

Figures 2, 3, 4A and 4B illustrates an embodiment of a connector 200. The connector includes a receiving portion 202 and a column holding portion 204.

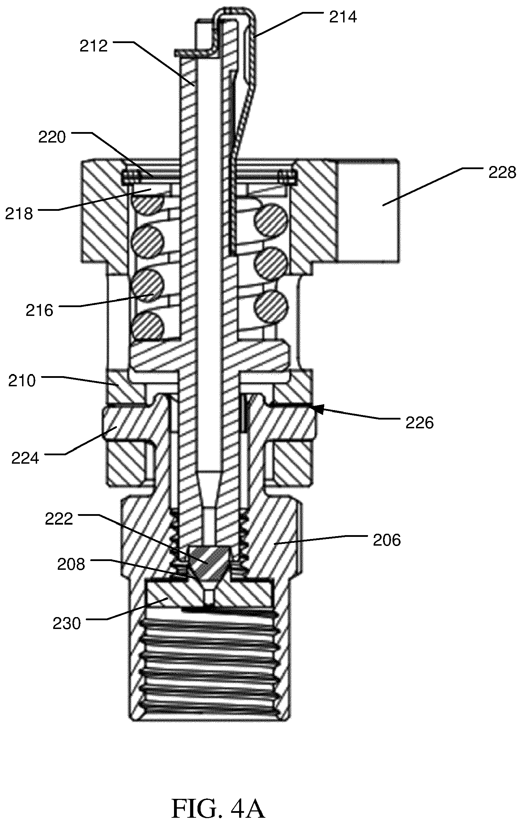

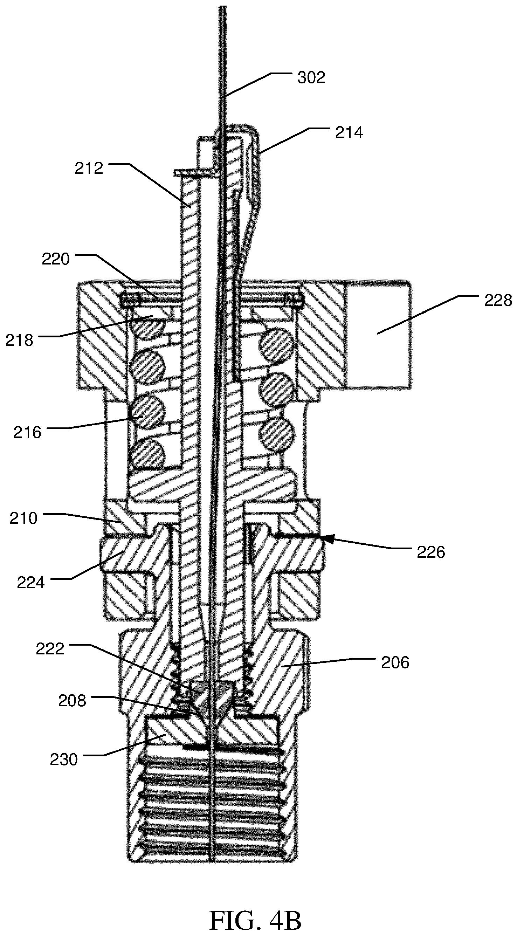

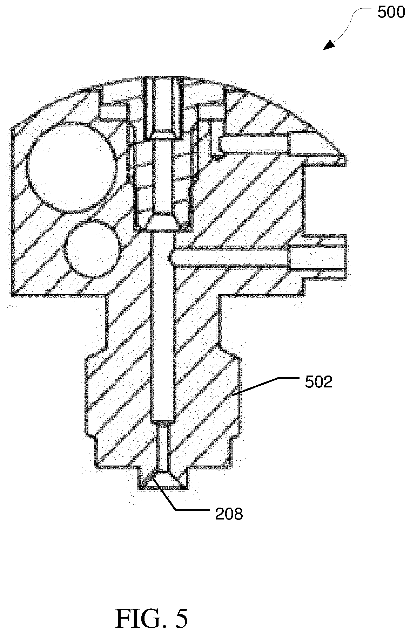

The receiving portion includes a receiver body 206 and a ferrule receiving conical surface 208. In various embodiments, an injector or detector can include an attachment point and the receiver body 206 can be coupled to the injector or detector, such as by threading the receiver body 206 onto the attachment point. In various embodiments, the ferrule receiving conical surface 208 can be an integral part of the injector or detector. Figure 5 illustrates a cross section of a portion of a detector or injector 500. The detector or injector 500 can include an attachment point 502. The attachment point 502 can include the ferrule receiving conical surface 208. Returning to Figures 2-4, when the attachment point and the receiver body 206 are coupled, the ferrule receiving conical surface 208 can be positioned to seal against a ferrule 222. In various embodiments, a ferrule sealing washer 230 can be positioned within the receiver body 206 between the injector or detector. The ferrule sealing washer 230 can include the ferrule receiving conical surface 208 as shown in cross section in Figure 4.

The column holding portion 204 includes a body 210, a column guide tube 212, a column retention spring 214, a compression spring 216, a washer 218, and a retention clip 220.

As illustrated in Figures 4A and 4B, when assembled, a ferrule 222 can be compressed between the ferrule sealing washer 230 and the column guide tube 212. The compression spring 216 can bias the column guide tube 212 towards the ferrule receiving conical surface 208 with sufficient force to deform the ferrule 222 forming a gas tight seal to substantially prevent leaks. The column guide tube 212 can force the ferrule 222 against the ferrule receiving conical surface 208. In addition to the ferrule 222 forming a seal with the ferrule receiving conical surface 208, the ferrule receiving conical surface 208 can deform the ferrule 222 inward to seal against the column to form a seal between the column and the ferrule 222. The ferrule 222 can also seal against the column guide tube 212.

The column retention spring 214 can hold a column 302 in place as illustrated in Figure 4B. This fixes the axial position of the column relative to the column holding portion 204 and the ferrule 222. The column retention spring 214 can be deflected laterally, such as by applying pressure with a finger, to allow the free movement of the column in an axial direction. Once the column is inserted into the column holding portion 204 and the ferrule 222 is threaded onto the column, the depth of the column can be set and the pressure on the column retention spring 214 released to fix the column in place and prevent slippage while trimming and connecting the column holding portion 204 to the receiving portion 202.

In various embodiments, receiver body 206 can include coupling wings 224. Body 210 can include corresponding coupling slots 226 and finger wings 228. When connecting the receiving portion 202 and the column holding portion 204, the coupling wings 224 can be inserted into the coupling slots 226. By applying a rotational force on the finger wings 228, the column holding portion 204 can be rotated relative to the receiving portion 202, such as by a quarter rotation, to secure the coupling wings 224 in the coupling slots 226.

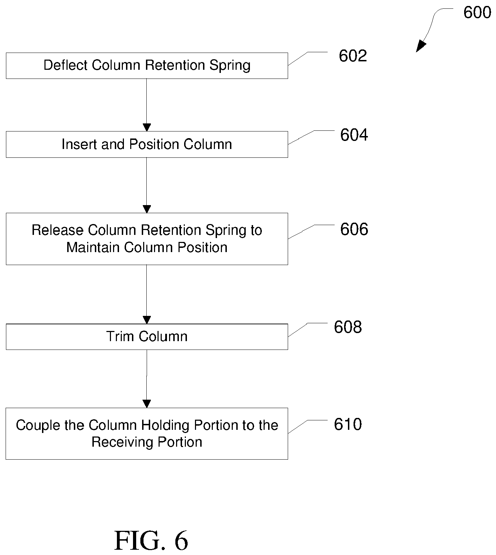

Figure 6 shows a method of connecting a gas chromatography column. At 602, the column retention spring is deflected, such as by applying lateral pressure with a finger. Deflection of the spring moves a column opening towards the center of the column guide tube, and allows a column to be inserted, as indicated at 604. After positioning the column axially relative to the column holding portion, the column retention spring can be released, as indicated at 606. Pressure can be applied between the column retention spring and the column guide tube to fix the axial position of the column relative to the column holding portion. While the column is held by the column retention spring, the ferrule can be threaded onto the column and the end of the column can be trimmed. In various embodiments, the positioning of the column can be adjusted by depressing the column retention spring and moving the column. Once the axial position is correct, the column retention spring can be released. At 608, the column is trimmed to length. Trimming the column can remove contamination or damage created by inserting the ferrule. Additionally, trimming the column can ensure the column end is at an optimal position for the connection. The column retention spring substantially prevents column slippage during trimming, ensuring the proper insertion length. At 610, the column holding portion can be coupled to the receiving portion. When coupled, the compression spring can bias the column guide tube towards the ferrule sealing washer with sufficient force to deform the ferrule and create a gas tight seal.

While the present teachings are described in conjunction with various embodiments, it is not intended that the present teachings be limited to such embodiments. On the contrary, the present teachings encompass various alternatives, modifications, and equivalents, as will be appreciated by those of skill in the art.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied and still remain within the spirit and scope of the various embodiments.

## Claims

1. A connector for a gas chromatography column, comprising:
a receiving portion coupled to a ferrule receiving conical surface; and
a column holding portion including:
a column guide tube and a column retention spring to fix the axial position of the column; and
a compression spring to bias the column guide tube towards the ferrule receiving conical surface;
wherein, when connected, a ferrule is compressed between the ferrule receiving conical surface and the column guide tube.

2. The connector of claim 1, wherein the receiving portion further includes wings and the column holding portions further includes coupling slots; and wherein when connected, the wings engage with the coupling slots.

3. The connector of any of the preceding claims, wherein the receiving portion further includes wings and the column holding portions further includes coupling slots.

4. The connector of claim 3, wherein, when connected, the wings are secured within the coupling slots by a rotation of the column holding portion relative to the receiving portion.

5. The connector of any of the preceding claims, wherein the column retention spring is configured to deflect laterally to allow free movement of the column in an axial direction relative to the column guide tube.

6. The connector of any of the preceding claims, further comprising a ferrule, the ferrule positioned between the column guide tube of the column holding portion and the ferrule receiving surface of the receiving portion when the column holding portion and the receiving portion are connected.

7. The connector of claim 6, wherein the compression spring biases the column guide tube towards the ferrule receiving conical surface with sufficient force to deform the ferrule to form a gas tight seal.

8. A gas chromatography system comprising:
a capillary column including a stationary phase for chromatographically separating components of a sample; and
the connector of any of the preceding claims.

9. A method of connecting a capillary column, comprising:
deflecting a column retention spring of a column holding portion of a connector;
positioning the capillary column within the column holding portion of the connector;
releasing the column retention spring to fix the axial position of the capillary column within the column holding portion; and
coupling the column holding portion to a receiving portion.

10. The method of claim 9, wherein coupling the holding portion to the receiving portion further includes biasing a column guide tube of the column holding portion towards the receiving portion with a compression spring; and comprising compressing a ferrule between the column guide tube and a ferrule receiving surface of the receiving portion.

11. The method of claim 9 or claim 10, wherein coupling the column holding portion to the receiving portion further includes inserting coupling wings of the receiving portion into coupling slots of the column holding portion and rotating the column holding portion relative to the receiving portion to secure the coupling wings in the coupling slots.

12. The method of any of claims 9 through 11, wherein deflecting the column retention spring includes laterally deflecting the column retention spring to allow free movement of the column in an axial direction relative to the column guide tube.

13. The method of any of claims 9 through 12, further comprising trimming the column end after releasing the column retention spring and prior to coupling the column holding portion and the receiving portion.
